# FASCICULE DE BREVET EUROPEEN

(11) **EP 1 109 000 B1**
(45) Date de publication et mention de la délivrance du brevet: **12.02.2003**
(21) Numéro de dépôt: 00403325.4
(22) Date de dépôt: 28.11.2000
(51) Int. Cl.: G01L 5/00

(54) **Came de commande de sertissage de conteneur munie de cellules de charge**
Steuernocke mit Kraftmesszellen für Behälterfalzung
Container seaming control cam with load cells

(30) Priorité: 13.12.1999 FR 9915684
(43) Date de publication de la demande: 20.06.2001
(73) Titulaire: CENTRE TECHNIQUE DES INDUSTRIES MECANIQUES, F-60300 Senlis (FR)
(72) Inventeur: Buisson, Raymond, 60300 Senlis (FR)
(74) Mandataire: Bertrand, Didier

(56) Documents cités:
- WO-A-98/07534

## Description

La présente invention concerne le sertissage de conteneurs tels que des boîtes de conserve ou analogue, au moyen d'une sertisseuse dans laquelle l'application de l'outil (généralement une molette) de sertissage sur la lèvre à sertir est commandée par le roulement d'un galet sur une came formée d'une couronne sur un secteur actif de laquelle est formé extérieurement un profil de rampe ascendante et de rampe descendante.

La fabrication et/ou l'utilisation de boîtes de conserve nécessite une ou deux opérations de sertissage des fonds. L'étanchéité d'une boîte fermée dépend du serrage existant à l'intérieur des bords sertis.

Sur les sertisseuses en deux passes, ce serrage est intimement lié à l'effort appliqué sur les tôles de la boîte et du fond au moment de la deuxième passe. Il existe deux techniques de contrôle de la qualité du sertissage par mesure en temps réel de l'effort appliqué par la came sur le galet actionnant la molette de sertissage.

La première technique, illustrée par le document US 4205617 A, utilise des capteurs d'efforts, qui semblent être des cellules de charge, intégrés à la came à zone active massive et reliés à un circuit approprié de traitement de signal, mais la façon de les intégrer n'est pas décrite, or il y a lieu de penser que la façon d'implanter les capteurs influence grandement les résultats des mesures et leur fiabilité.

La seconde technique est utilisée par une came de commande de sertissage en deux passes, présente sur le marché, et dont la came correspondant à la seconde passe comporte dans le secteur actif, intérieurement, un profil défini par deux échancrures profondes symétriques en coin arrondi dans lesquelles sont disposées des jauges de déformation, et non plus des cellules de charges, dont les signaux électriques de sortie sont traités par un dispositif d'analyse pour produire un signal représentatif de l'effort exercé par la came sur le galet, en pratique un signal proportionnel audit effort. Une telle disposition est aussi montrée dans les documents WO 98 07534 et EP 0181 234. A la connaissance de la Demanderesse, ces deux échancrures sont usinées dans l'épaisseur de la came, à l'opposé du profil actif, selon une forme qui n'est définie qu'en fonction des contraintes liées à l'installation des jauges.

Les études menées par la Demanderesse ont montré que cette disposition n'est pas pleinement satisfaisante en ce sens que le signal électrique obtenu ne représente pas fidèlement l'effort appliqué par la came pour réaliser le sertissage. S'il apparaît bien comme on s'y attend une partie sensible dans la zone active du profil, il s'avère que lorsqu'un effort constant se déplace d'une extrémité à l'autre de la partie sensible, la réponse du capteur n'est pas constante, contrairement à ce qui est souhaité. Elle est maximale lorsque l'effort est au milieu et minimale lorsqu'il se trouve à l'une des extrémités. Le taux de non-uniformité peut atteindre, voire dépasser 50%, c'est-à-dire que lorsque l'effort est au milieu, la réponse du système peut dépasser le double de ce qu'elle est lorsque l'effort est à l'une des extrémités.

Le but de l'invention est de remédier aux défauts des deux techniques et de proposer une came, ou une modification de came existante, permettant d'avoir une meilleure réponse sur toute la longueur de la partie sensible.

Le but de l'invention est atteint grâce à une came de commande de sertissage formée d'une couronne sur un secteur actif de laquelle sont formés d'une part extérieurement un profil de rampe ascendante et de rampe descendante et d'autre part intérieurement un profil définissant une zone de plateau entre deux échancrures profondes, des capteurs étant disposés de manière que leurs signaux électriques de sortie soient traités par un dispositif d'analyse pour produire un signal représentatif de l'effort exercé par la came sur un galet de commande qui roule sur elle, caractérisée en ce que les capteurs sont constitués par des cellules de charge disposées entre la zone de plateau et une pièce d'appui réglable qui lui fait face et qui est fixée à une partie non active de la came. L'épaisseur des ponts de matière laissés par les échancrures profondes est dimensionnée de telle manière que leur raideur soit négligeable devant celle des capteurs. La pièce d'appui, rigide, reconstitue une zone active peu déformable, qui se rapproche d'une zone active massive sensiblement indéformable de la première technique, au contraire de la zone active classique à profil intérieur à plateau de la seconde technique. Dans un mode de réalisation particulier de l'invention, on a pu définir les différents composants pour que l'augmentation de déflexion sous l'action de l'effort de sertissage du profil de la came dans sa partie active par rapport à la déflexion de la came massive de la première technique soit au plus égale à deux centièmes de millimètre. Les cellules de charge sont avantageusement des pastilles (rondelles) de quartz et sont précontraintes ; leur coefficient de raideur très élevé (plusieurs centaines de millions de daN par mètre) est compatible avec la déflexion minimale définie ci-dessus.

La came selon l'invention peut facilement être obtenue par modification d'une came existante, notamment quand elle comprend déjà une zone de plateau. On usine des taraudages sur le fond de la came qui permettent la fixation de la pièce d'appui des capteurs par des vis, avantageusement combinées à un système de réglage à excentriques.

Ce système de réglage permet d'une part de précontraindre les capteurs, d'autre part de prédéformer légèrement le profil de la came en sens inverse de la déformée qui apparaîtra au moment du passage du galet. Outre la diminution des effets de la déformation du système sous charge, cette opération permet d'éliminer les micro-chocs de contacts entre les pièces en cours de fonctionnement et ainsi d'éliminer l'usure par frottement ("fretting corrosion").

D'autres caractéristiques et avantages de la présente invention ressortiront de la description ci-après d'un exemple de réalisation de l'invention illustré dans les dessins annexés sur lesquels :

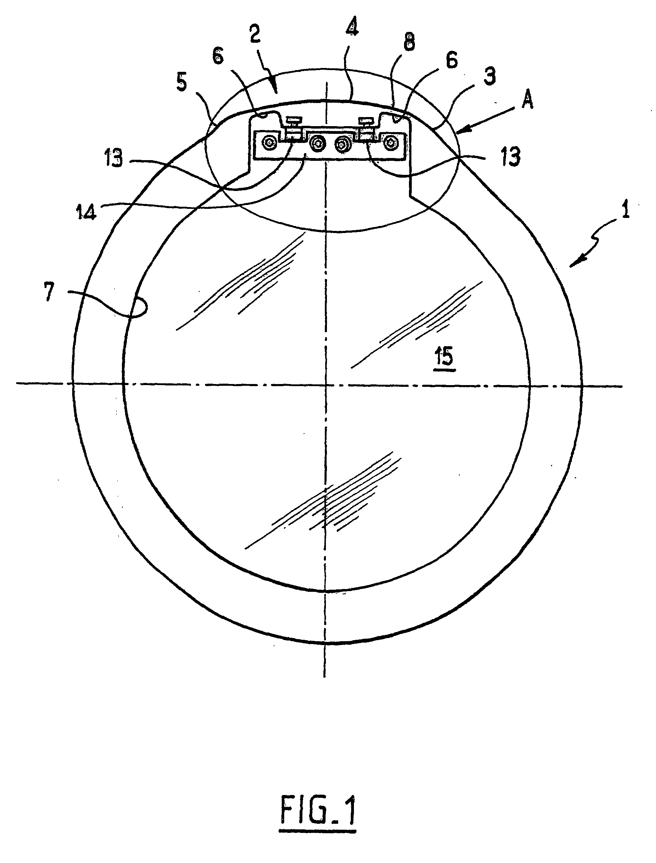

- la figure 1 est une vue de dessus d'une came de commande conforme à l'invention,
- la figure 2 est une vue agrandie du détail A de la figure 1,
- la figure 3 est un schéma de montage des capteurs.

L'ensemble de commande est constitué de deux cames superposées respectivement de première et de seconde opération, seule la came de seconde opération 1 étant détaillée sur les figures. Comme connu en soi, lors de la seconde opération qui intéresse seule l'invention, une molette montée au bout d'un bras lié à un arbre pivotant vient sertir définitivement la lèvre de sertissage du fond de boîte ; un galet monté rotatif au bout d'un autre bras lié à l'arbre roule sur la came 1 et commande ainsi le pivotement de l'arbre et donc la force d'application de la molette de sertissage. A cet effet, la came 1 comporte une région active 2 dans laquelle est formée, sur la périphérie cylindrique de la came 1, un profil utile, composé par exemple d'une rampe ascendante 3 suivie d'un plateau 4 et d'une rampe descendante 5. La came 1 est sous forme d'un anneau épais à deux faces annulaires planes. Dans la région active 2, on a usiné, par exemple par électroérosion, deux échancrures profondes 6 à partir de la périphérie intérieure 7 de la came, délimitant entre elles une partie sensible sur laquelle s'effectue la mesure de l'effort appliqué par la came sur le galet. Les deux échancrures 6 forment des ponts de matière relativement mince 8, entre lesquels se trouve une partie plus épaisse de mesure 9 ayant une face intérieure plane ou zone de plateau 10 et une face supérieure plane 11. Sous la partie de mesure 9 sont disposés les capteurs 13 constitués par des rondelles de charge. Les capteurs 13 sont fixés et réglés grâce à une barre 14 placée sous la région active 2 et vissée dans le fond 15 de came adjacent aux premier et second profil de came, grâce à deux vis d'extrémité 16 fixant la barre avec un certain jeu et à deux vis centrales 17 coopérant avec des excentriques 18 pour régler exactement la position de la barre par rapport à la partie de mesure 9. La barre 14 comporte deux logements 19 accueillant, outre le capteur 13, une rondelle 20 d'appui à surface parfaitement plane portant sur la face intérieure 10. Deux cavités 21 sont formées dans la partie 9, par exemple par électro-érosion, pour y loger un écrou 22 dont le trou fileté reçoit l'extrémité filetée de vis 23 de maintien des capteurs 13 ; les vis 23 traversent la barre 14, les capteurs 13 et les rondelles 20 et sont retenues par leur tête dans des logements 24 de la barre 14. Une rainure périphérique 25 est formée dans la barre 14 et sur la surface 11 pour loger un joint d'étanchéité et des trous 26 dans la partie 9 permettent de visser un couvercle non représenté au-dessus de la partie de mesure 9 et de la barre 14. Les couvercles et l'étanchéité associée évitent que l'humidité ou des impuretés ne viennent en contact avec les capteurs et les connexions. Les dimensions de la barre 14 sont adaptées pour s'ajuster entre les parois parallèles extérieures 27 des entailles 6, perpendiculaires à la face 10, et qui s'étendent depuis les ponts de matière 8 jusqu'à la périphérie intérieure 7 de la came.

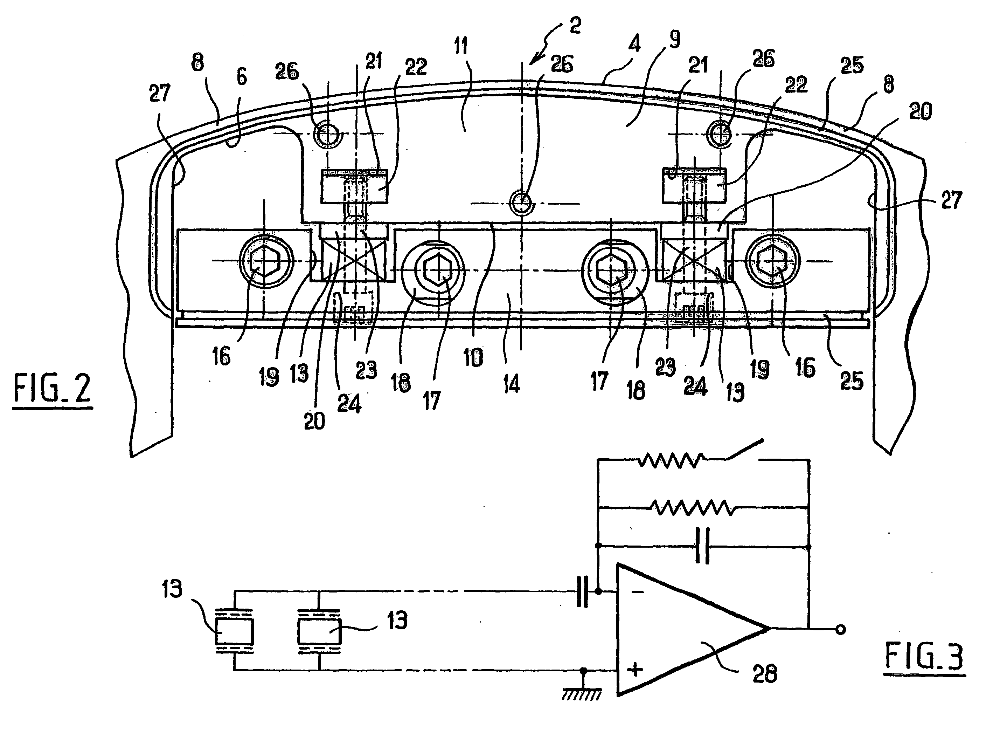

Comme le montre la figure 3, le conditionnement électrique des signaux fournis par les deux capteurs 13 se limite à l'utilisation d'un seul amplificateur de charge 28 ayant une constante d'intégration courte. Cela a pour avantage d'éliminer toutes les dérives statiques du système de mesure (dérive en température en particulier).

## Revendications

1. Came (1) de commande de sertissage formée d'une couronne sur un secteur actif (2) de laquelle sont formés d'une part extérieurement un profil de rampe ascendante (3) et de rampe descendante (5) et d'autre part intérieurement un profil définissant une zone de plateau (10) entre deux échancrures profondes (6), des capteurs (13) étant disposés de manière que leurs signaux électriques de sortie soient traités par un dispositif d'analyse pour produire un signal représentatif de l'effort exercé par la came (1) sur un galet de commande qui roule sur elle, **caractérisée en ce que** les capteurs (13) sont constitués par des cellules de charge disposées entre la zone de plateau (10) et une pièce d'appui réglable (14) qui lui fait face et qui est fixée à une partie non active (15) de la came (1).

2. Came selon la revendication 1, **caractérisée en ce que** les cellules de charge (13) sont constituées par des pastilles de quartz.

3. Came selon l'une quelconque des revendications 1 ou 2, **caractérisée en ce que** la pièce d'appui (14) induit une précontrainte sur les cellules de charge (13).

4. Came selon l'une quelconque des revendications précédentes, **caractérisée en ce que** la pièce d'appui (14) est fixée sur le fond (15) de la came.

5. Came selon la revendication 4, **caractérisée en ce que** la pièce d'appui (14) est fixée au moins en partie par l'intermédiaire d'excentriques (18) de réglage.

## Claims

1. Seaming driving cam (1) formed by an annulus, formed on an active sector (2) of which are, on the one hand, an external profile comprising an ascending ramp (3) and a descending ramp (5) and, on the other hand, an internal profile defining a plateau zone (10) between two deep recesses (6), sensors (13) being arranged so that their electrical output signals are processed by an analytical device to produce a signal representing the force exerted by the cam (1) on a drive follower that rolls against it, the cam being **characterized in that** the sensors (13) are load cells arranged between the plateau zone (10) and an adjustable bearing part (14) that sits in front of it and that is fixed to an inactive part (15) of the cam (1).

2. Cam according to Claim 1, **characterized in that** the load cells (13) are quartz discs.

3. Cam according to either of Claims 1 and 2, **characterized in that** the bearing part (14) induces a prestress on the load cells (13).

4. Cam according to any one of the preceding claims, **characterized in that** the bearing part (14) is fixed to the base (15) of the cam.

5. Cam according to Claim 4, **characterized in that** the bearing part (14) is fixed at least partly via intermediate adjustment eccentrics (18).

## Patentansprüche

1. Steuernocke (1) für das Bördeln, gebildet von einer Krone auf einem aktiven Sektor (2), von der einerseits an der Außenseite ein ansteigendes Rampenprofil (3) und ein absteigendes Rampenprofil (5) und andererseits an der Innenseite ein Profil gebildet wird, das eine Plateauzone (10) zwischen zwei tiefen Ausschnitten (6) definiert, wobei Meßaufnehmer (13) derart angeorndet sind, daß ihre elektrischen Ausgangssignale von einer Auswertevorrichtung behandelt werden zur Erzeugung eines Signals, das die von der Nocke (1) auf eine auf ihr abrollende Steuernocke ausgeübte Kraft wiedergibt,
**dadurch gekennzeichnet, daß** die Meßaufnehrner (13) aus Lastzellen bestehen, die zwischen der Plateauzone (10) und einem einstellbaren Widerlagerstück (14) angeordnet sind, das dieser gegenüberliegt und an einem inaktiven Teil (15) der Nocke (1) befestigt ist.

2. Nocke nach Anspruch 1,
**dadurch gekennzeichnet, daß** die Lastzellen (13) aus Quarzplättchen bestehen.

3. Nocke nach einem der Ansprüche 1 oder 2,
**dadurch gekennzeichnet, daß** das Widerlagerstück (14) auf die Lastzellen (13) eine Vorspannung ausübt.

4. Nocke nach einem der vorangehenden Ansprüche,
**dadurch gekennzeichnet, daß** das Widerlagerstück (14) am Boden (15) der Nocke befestigt ist.

5. Nocke nach Anspruch 4,
**dadurch gekennzeichnet, daß** das Widerlagerstück (14) mindestens teilweise über Einstellungs-Exzenter (18) befestigt ist.
